# EUROPEAN PATENT SPECIFICATION

(11) **EP 4 724 837 B1**
(45) Date of publication and mention of the grant of the patent: **04.11.2026**
(21) Application number: 24783643.0
(22) Date of filing: 01.10.2024
(51) Int. Cl.: G01V 8/00, G01J 3/02, G02B 23/24, G02B 23/26, G02B 26/08

(54) **POSITIONING DEVICE FOR POSITIONING A PLURALITY OF SENSOR AND / OR EFFECTOR DEVICES**
POSITIONIERVORRICHTUNG ZUM POSITIONIEREN EINER VIELZAHL VON SENSOR- UND/ODER EFFEKTORVORRICHTUNGEN
DISPOSITIF DE POSITIONNEMENT D'UNE PLURALITÉ DE DISPOSITIFS CAPTEURS ET/OU EFFECTEURS

(30) Priority: 06.10.2023 DE 102023127274
(43) Date of publication of application: 15.04.2026
(73) Proprietor: Leibniz-Institut für Astrophysik Potsdam (AIP), 14482 Potsdam, Brandenburg (DE)
(72) Inventor: DE JONG, Roelof, 14558 Nuthetal (DE)
(74) Representative: Maikowski & Ninnemann Patentanwälte Partnerschaft mbB
(86) International application number: PCT/EP2024/077557
(87) International publication number: WO 2025/073670

(56) References cited:
- WO-A1-2021/243397
- US-A1- 2011 004 157
- US-A1- 2011 114 080
- US-A1- 2013 084 049
- US-A1- 2020 253 678

## Description

The current disclosure relates to a positioning device for a plurality of sensor devices and / or effector devices with the features of claim 1.

In scientific and industrial applications, it often is necessary to position sensor elements or effector devices like light sources or sampling probes in a defined patrol volume or in a certain geometric pattern. With such a positioning device comprising a plurality of sensor elements or effector devices it is possible to obtain data at spatially distributed and defined locations and / or to apply some pointwise action through effector devices.

One example for such an application is a spectrographic measurement device coupled to an astronomical telescope. The incoming light from different sources such as stars or galaxies is received with sensor elements at defined positions in the patrol volume, so that each light source can spectroscopically be analyzed separately.

Several technologies currently exist for this particular application as described, e.g., in the survey article, by Smith et al. 2004, "A survey of fiber positioning technologies", Proceedings of SPIE - The International Society for Optical Engineering 5495:348-359, DOI: 0.1117/12.551004. A so called "fishermen around a pond" solution uses, e.g., motorized sticks around the edge of the focal surface to place the tips with attached fibers somewhere in the desired observation field, but only a limited number of fibers can be placed using this approach. WO2021/243397 discloses a known optical fiber positioning system.

But it is clear that the application of spatially defined sensor devices is not limited to a spectroscopic or astronomical context.

Therefore, it is the objective to provide a positioning device with a high density of sensor devices and / or effector devices which can be positioned flexibly in space to sample data in a defined way.

This is addressed by the subject matter of claim 1.

The positioning device for positioning a plurality of tubular elements comprises tubular elements which are coupled to at least one sensor device and / or effector device. Tubular elements can, e.g., be a kind of carrier for the sensor devices and / or the effector devices. The positioning allows to point the tubular elements so that sensor devices and / or effector device can, e.g., access data at precise location and / or apply some material at a precise location.

With this measurement data is obtainable at a tip of the distal end of the tubular elements and transferrable to the at least one sensor device and / or a pointwise action is effected by the at least one effector device. The tip of the tubular elements is one aspect in obtaining the pointwise measurement data and / or in the application, as the tip can be directed, e.g., to points in a predefined manner because the tubular elements are movably connected with a proximal positioning element towards or at the base of the plurality of tubular elements, the tubular elements in particular being arranged on a grid pattern on the base.

The tubular elements further comprise a distal positioning element, distal from the proximal positioning element, the tubular elements being more rigid than the positioning elements or the region around the positioning elements. The positioning elements provide movability to the tubular elements or parts thereof. For example, the proximal positioning element towards the base of the tubular elements could provide some swivel or tilting capabilities. The distal positioning element can, e.g., provide some controlled movability for the tip of the tubular elements.

The movability of at least one of the positioning elements is effect by them being connected with a steering device for a spatial positioning of the tips of the plurality of the tubular elements.

With this it is possible to flexibly position the location of the tips of the tubular elements which allows the pointwise taking of measurements or the pointwise applying of effects (e.g. applying fluid) to some substrate.

In one exemplary embodiment the tips of the tubular elements are positionable in at least one spatial direction relative to the base or relative to each other, in particular, the tubular elements are omnidirectionally tiltable around a location at the base, in particular using a parallelogram-mechanism. This, e.g., allows that the of the tubular elements are positionable in a pre-defined position, in particular in a plane or a curved surface. With this, pointwise measurements can be taken and / or effects can be applied, e.g., in a predefined focal surface of a telescope or a predefined velocity field in a fluid flow device. If different measurements are to be taken, the tubular elements can be adjusted individually or collectively.

In one embodiment, at least one sensor device and / or at least one effector device is positioned at the tip or at the proximal end of tubular elements. When the sensor elements are, e.g., positioned at the tip, the sensor element would be located directly to take the measurements. It is also possible to locate the sensor elements away from the tips, e.g., towards the base and transmit the measured data, e.g., through a fiber to the sensor element.

In one embodiment, the at least one sensor device comprises a sensor element sensitive to
- electromagnetic waves, in particular light in the visible and near-infrared range and/or
- a property of a magnetic field and / or
- a property of a chemical substance, in particular a gas and / or
   particles and / or
- a property of biological signals or biological material.

A property of a magnetic field can, e.g., be measured with a Hall-Effect Sensor. Properties of chemical substances or biological signals can, e.g., be measured by electrochemical sensors or probes.

In a further embodiment, the at least one effector device comprises a light source or fluid manipulator for taking pointwise fluid samples and / or applying fluid pointwise. This can, e.g., be used in handling microbiological probes.

In one possible application of the positioning device, the at least one sensor device is part of a spectroscopic device as a data processing device, in particular for astronomical observations, so that light is collectable at the tips of the tubular elements and transmitted through optical fibers coupled to the tubular elements to the spectroscopic device. This allows, e.g., the flexible and efficient pointing of the tips within a patrol volume to gather light pointwise from astronomical object. Some or all tips can be oriented towards the incoming light of a plurality of astronomical objects.

Embodiments of the positioning device can comprise a steering device that is coupled with at least one actuator element, in particular longitudinal actuator elements in or along the wall of the tubular elements, spring elements and / or wires in or along the tubular elements for transferring a movement, a force and / or a moment on at least one the positioning element. Actuator elements which are located in or along the walls of the tubular elements (e.g., being part of the walls) allow a space-saving, thin design of the tubular elements. This allows a high-density spacing of the tubular elements, while maintaining their steerabilities. The steering device can comprise an electromechanical drive connected to at least one of the actuator elements. With this embodiment, small and accurate positionings of the tubular elements, and hence the tips, is possible.

The steering device comprises a tripod device with three actuator elements for effecting a movement, in particular a tilt movement and / or an axial movement of the proximal positioning element.

The actuator elements are in some embodiments designed to transfer a resulting force and / or moment on the distal positioning elements to move the distal positioning elements relative to the tubular elements. This can, e.g., be achieved by applying pulling at an actuator element on one side of the tubular elements and pushing at another actuator element on the opposite side of the tubular element. This is one approach to realize a parallelogram-mechanism for the controlled movement of the tip of the tubular elements.

In one embodiment, the walls of the tubular elements comprise a structure with at least one longitudinal slit forming at least one actuator element in the walls of the tubular elements. The actuator elements are also connected to the steering device so that a force and / or a moment is transferrable to the positioning elements through the actuator elements. The tubular elements can be made very space efficient by machining the actuator elements directly from the material of the tubular elements.

As the tubular elements, and hence the tips, can be subject to disturbances, the steering device can, e.g., be coupled with a control device for keeping the sensor devices, the effector devices and / or the tips of the tubular elements in a predetermined position, in particular in a predetermined plane or predetermined surface.

Furthermore, it is possible that the position of the tips of the tubular elements can be locked in a predetermined position. This is, e.g., important for long-duration measurements.

In one embodiment, the tips of the tubular elements are positionable in a parallel direction relative to each other.

This issue is also addressed by a measurement process with the features of claim 17.

Embodiments are described exemplary in connection with the drawings.
Fig. 1 shows a schematic view of a first embodiment of a positioning device, here a measurement device;
Fig. 2 shows a schematic view of a second embodiment of the embodiment of the positioning device;
Fig. 3 shows a perspective view of an embodiment of a flexible (bendable) positioning element of a tubular element;
Fig. 4 shows a sectional view of a further embodiment of a tubular element with flexible (bendable) positioning elements in a straight position (A) and in a bent position (B);
Fig. 5 shows a side view of working model with three actuating elements;
Fig. 6 shows a perspective view of a further embodiment of a tubular element with flexible (bendable) positioning elements in a straight position (A) and in a bent position (B);
Fig. 7 shows a perspective view of a further embodiment of a tubular element with flexible (bendable) positioning elements in a straight position (A) and in a tilted position (B) and a steering device;
Fig. 8 shows the embodiment of Fig. 7 in a perspective view with flexible (bendable) positioning elements in a straight, low position (A) and in a straight, high position (B) together with a steering device;
Fig. 9 shows an alternative embodiment to the one shown in Fig. 7 and 8;
Fig. 10 shows an embodiment of a measurement with a control system using an imaging system.

In the following, embodiments are described mainly in the context of measurement devices, e.g., for pointwise spectroscopic measurements in an astronomical telescope. It should be clear that that embodiments described could also be used for other measurement purposes, such as, e.g., pointwise measurements in fluid flow systems. But as the embodiments are concerned with the deliberate and flexible pointwise positioning of the plurality of tubular elements 1, effectors could be used to, e.g., apply fluid over many pointwise locations or to take samples at many pointwise locations.

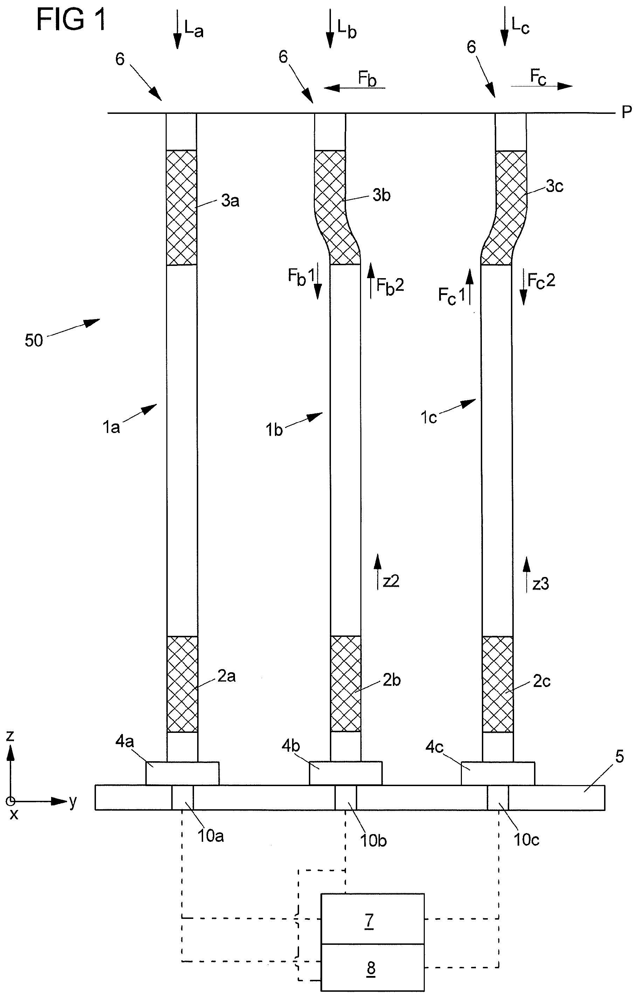

In Fig. 1, a partial view of an embodiment of measurement device 50 is shown which can be used, for measuring in coming data Lₐ, L_{b}, L_{c}, such as light data in this case- In this particular technical context, tubular elements 1 typically have a diameter of 1 mm. The length of the tubular mid-section would in the range of 50 to 100 mm. The positioning elements 2, 3, which are described below have lengths between 2 and 10 mm.

Three sensor devices 10a, 10b, 10c are located at a base 5. In practical applications, the number of sensor devices 10a, 10b, 10c can be much larger, e.g., in the order of thousands. The view in Fig. 1 is limited to only three sensor devices 10a, 10b, 10c for reasons of simplicity.

Each of the sensor devices 10a, 10b, 10c is connected with one glass fiber (not shown in Fig. 1) within the respective tubular element 1a, 1b, 1c. The tubular elements 1a, 1b, 1c are extending away from the base 5, i.e., the sensor devices 10a, 10b, 10 are at the proximal ends of their respective tubular elements 1a, 1b, 1c and the glass fibers. The tubular elements 1a, 1b, 1c can, in one embodiment, be positioned in a grid pattern, i.e., a regular pattern like a cartesian coordinate system. But in other embodiments, only some or none of the tubular elements 1a, 1b, 1c may be positioned in such a grid pattern.

The glass fibers extend from the base to the distal ends of the tubular elements 1a, 1b, 1c, i.e., the tips 6a, 6b, 6c of the tubular elements 1a, 1b, 1c. That means that incoming light Lₐ, L_{b}, L_{c} is transmitted from the tips 6a, 6b, 6c via the glass fibers to the sensor devices 10a, 10b, 10c.

The tips 6a, 6b, 6c can be independently positioned - as will be explained below - in a measurement space (or patrol volume) to receive signals, here light signals Lₐ, L_{b}, L_{c} coming from different light sources, such as stars or other astronomical objects. In a spectroscopic application it is important that the incoming light L and the respective sensor device 10a, 10b, 10c are oriented properly relative to each other, so that ideally only light from one source Lₐ , L_{b}, L_{c} is detected by its assigned sensor device 10a, 10b, 10c.

As the position of the stars is known, the light position of the signals Lₐ, L_{b}, L_{c} within the measurement space (e.g., a focal plane / surface of a telescope) is known as well. Therefore, it is required that the sensor devices 10a, 10b, 10c can take measurements from the predetermined locations at the tips 6a, 6b, 6c. If a different section of the sky is to be photographed, the tips 6a, 6b, 6c of the tubular elements 1a, 1b, 1c are moved to and positioned at the correct new location, so that the incoming light signals Lₐ, L_{b}, L_{c} can be captured correctly and ideally as completely as possible.

The embodiment shown in Fig. 1 addresses this issue, i.e., the positioning of the tips 6a, 6b, 6c in a flexible way.

Each tubular element 1a, 1b, 1c is movably connected with a proximal positioning element 2a, 2b, 2c towards or at a base 5 of the plurality of tubular elements 1a, 1b, 1c.

Each of the tubular elements 1a, 1b, 1c comprises also a distal positioning element 3a, 3b, 3c distal from the proximal positioning element 2a, 2b, 2c, i.e., the distal positioning elements 3a, 3b, 3c are located further towards the tips 6a, 6b, 6c. The positioning elements 2a, 2b, 2c, 3a, 3b, 3c are flexible as will be further described below to allow for some movability or bendability. The tubular elements 1a, 1b, 1c are more rigid between the positioning elements 2a, 2b, 2c, 3a, 3b, 3c than in the regions of the positioning elements 2a, 2b, 2c, 3a, 3b, 3c themselves. Rigid in this context means that the regions of the positioning elements 2a, 2b, 2c, 3a, 3b, 3c are comparatively less rigid (i.e., more flexible) than the parts of the tubular elements 1a, 1b, 1c between the positioning elements 2a, 2b, 2c, 3a, 3b, 3c.

At least one of the of the positioning elements 2a, 2b, 2c, 3a, 3b, 3c is connected with a steering device 4a, 4b, 4c for the spatial positioning of the tips 6a, 6b, 6c of the tubular elements 1a, 1b, 1c. Each tip 6a, 6b, 6c can be individually positioned.

Due to the flexible positioning of elements 2a, 2b, 2c, 3a, 3b, 3c, the tips 6a, 6b, 6c can be moved in a controlled way by the steering devices 4a, 4b, 4c, what will be further described below.

In the context of Fig. 1, the left tubular element 1a is supposed to access incoming light Lₐ which is collinear with the tubular element 1a. Therefore, the tip 6a of the first tubular element 1a is oriented correctly to collect the light Lₐ and transmit it via the glass fiber to the sensor device 10a assigned to this tubular element 1a.

In most cases, the tubular elements 1b, 1c will not be oriented collinearly with the incoming light L_{b}, L_{c}. Therefore, the tips 6b, 6c will have to be positioned properly so that the light L_{b}, L_{c} is aligned with the respective tip 6b, 6c.

In the case of the middle tubular element 1b in Fig. 1, there is a slight left off-set of the incoming star light L_{b} relative to the tubular element 1b. Therefore, the tip 6b of the tubular element 1b is positioned by bending the distal positioning element 3b by a resulting moment M_{b} created by the steering device 4b towards the left to counterbalance the off-set. The resulting moment is achieved by combining a pulling downward force F_{b1} on the left and pushing upwards force F_{b2} on the right of the distal positioning element 3b, i.e., the forces act off-axis. With that, the incoming star light L_{b} becomes collinearly aligned with the tip 6b.

In the case of the right tubular element 1c in Fig. 1, there is slight right off-set of the incoming light L_{c} relative to the tubular element 1c. Therefore, the tip 6c of the tubular element 1c is positioned by bending the distal positioning element 3c by a moment M created by the steering device 4c towards the right to counterbalance the off-set. The resulting moment M_{c} is achieved by combining a pulling downward force F_{c2} on the right and a pushing upwards force F_{c1} on the left of the distal positioning element 3c. With that, the incoming star light L_{c} becomes collinearly aligned with the tip 6c. The technical details how the forces are applied off-axis to the positioning elements 2a, 2b, 2c, 3a, 3b, 3c will be detailed below.

As in this case, the distal positioning elements 3b, 3b, the respective tips 6b, 6c can be moved in the x- and y-direction (i.e., a plane parallel to the base 5). This means that the tips 6b, 6c are no longer in the same level plane P with the first tip 6a. Therefore, the steering devices 4b, 4c, can move the tubular elements 1b, 1c also in the z-direction (i.e., z₂, z₃ perpendicular to the base 5) to position the tips 6b, 6c back into the plane P.

In other embodiments, the position of the tips 6a, 6b, 6c can be adjusted to a predefined surface rather than a plane P. This depends on the geometry of the measurement space and the details of the measurement data.

As mentioned above, the embodiments shown are not limited to light L. In other embodiments, spatially distributed fluid flow data can be measured to determine, e.g., a velocity field. In other embodiments, spatially distributed magnetic data (using e.g. Hall sensors), substance concentrations, particle concentrations or biological signals are measured. The tips 6a, 6b, 6c could also be equipped with a prism for visible light and / or a camera for obtaining images.

The individually steerable tubular devices 1a, 1b, 1c allow a defined measurement of spatial data.

With this, the tips 6a, 6b, 6b of the tubular elements 1a, 1b, 1c can each be positioned so that they are aligned with the incoming light Lₐ, L_{b}, L_{c}.

The sensor devices 10a, 10b, 10c collect and, in some cases, might even process the incoming measurement data, i.e., the light Lₐ, L_{b}, L_{c}. The data is transmitted from the sensor devices 10a, 10b, 10c to a data processing device 7 which can, e.g., determine the spectral properties of each of the separately measured light signals Lₐ, L_{b}, L_{c} in a generally known way.

In another, not depicted embodiment, the sensor devices 10a, 10b, 10c are not located at the base 5, i.e., at the proximal end, but on the tips 6a, 6b, 6c. Then, the signals from the sensor devices 10a, 10b, 10c are transmitted, e.g., via a wire or a fiber to the data processing device 7.

In the embodiment shown, the positions of the tips 6a, 6b, 6c cannot only be fixed á priori. The measurement device 50 further comprises a control device 8 which can detect unintended movements, e.g., of the tips 6a, 6b, 6c and can apply a control signal to the steering devices 4a, 4b, 4c to correct the unintended movements. Those unintended movements can, e.g., be due to mechanical stress on the tubular elements 1a, 1b, 1c.

The first embodiment shown in Fig. 1 has only one movable, i.e., bendable positioning element 3a, 3b, 3c, the distal one, per tubular element 1a, 1b, 1c.

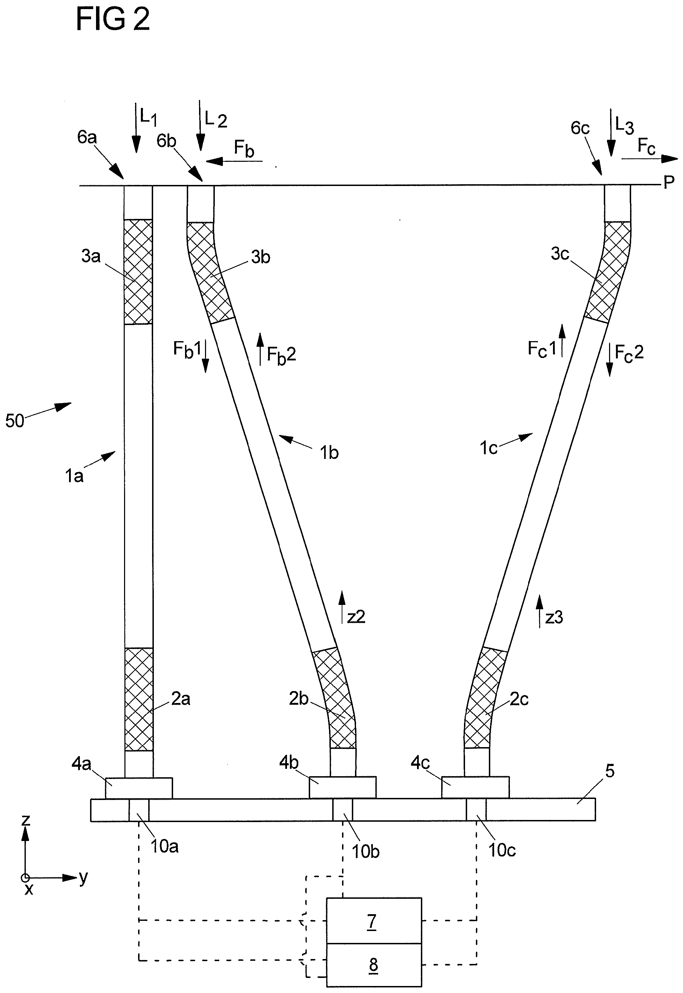

In the second embodiment depicted in Fig. 2, the distal positioning elements 3a, 3b, 3c and the proximal positioning elements 2a, 2b, 2c can be moved (bent) by the steering devices 4a, 4b, 4c. As the functionality of the first and second embodiments are the similar, reference can be made to the description of the first embodiment above. This embodiment can e.g. be used in a spectroscopic device in connection with an astronomical telescope.

In any case, with the embodiments shown, the tubular elements 1a, 1b, 1c can be positioned relative to the base 5 and / or relative to each other in one or more spatial directions x, y, z. The tubular elements 1a, 1b, 1c can, e.g., tilt in different directions around their respective bases and / or they can be lifted vertically relatively to the base 5.

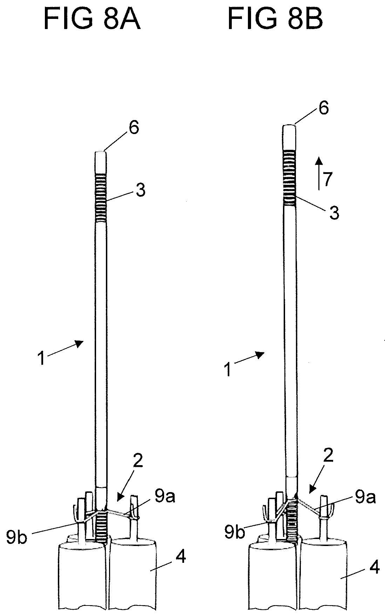

It is possible, to use the embodiment shown in Fig. 2 in the context with the embodiment shown in Fig. 8a and 8b. In that embodiment that actuator devices 9 are external to the tubular elements 1a, 1b, 1c and perform the actuation from the bottom of the measurement device.

In the following, different embodiments of tubular elements 1 with positioning elements 2, 3 are further described. It should be noted that a steerable tip for one endoscope is described in the article by Breedveld et al., "A new elastic Miniaturized Steerable Endoscope", IEEE Engineering in Medicine and Biology Magazine, Nov/Dec 2005, page 40ff.

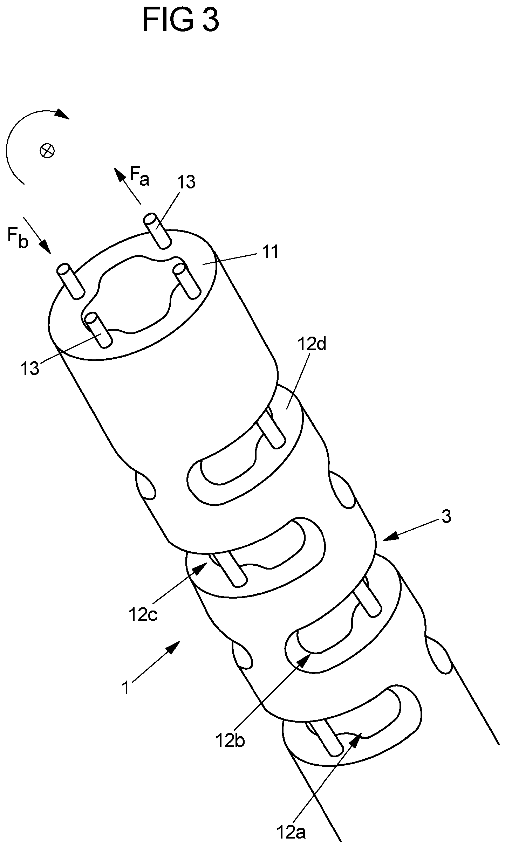

In Fig. 3, a tubular element 1 is shown in a perspective view. The tip 6 of the tubular element 1 is not shown but a cross-section to show the inner workings of this embodiment. Walls 11 of the tubular element 1 comprise four channels. Each of the channels comprises a cable 13 which can transmit a force and / or moment to the distal positioning element 3. The cables 13 are positioned at the corners of a square in the cross-section of the tubular element.

Here, the distal positioning element 3 is designed as the proximal positioning element 2. In other embodiments, they can be designed differently.

Actuator elements are connected to the steering device 4 (not shown in Fig. 3) so that a force F and / or a moment M is transferrable to the positioning elements 3 through the cables 13. The actuator elements 9 are fastened to some part of the tubular element 1, in particular towards the distal end, which is not shown in Fig. 3.

The wall 11 comprises slits 12 which go around the wall 11 for a little less than 180°. There are two slits 12 at each height, so that each segment is held up by two small connections 180° apart. The cuts at the different levels 12a, 12b, and 12c are each rotated by 90 degrees, so that the segments can be tilted about the small connections in all directions. The further slits 12c, 12d are also arranged in this way, so that wall 11 is systematically weakened by the slits 12a, 12b, 12c, 12d but still maintains its overall coherence or integrity. This weakening softens the region of the positioning element 3 so that it is less rigid than the wall 11 of the tubular element 1 outside that region. With this softening, a force F and / or a moment M can be applied to that region for bending it.

If in the embodiment of Fig.3, the tubular element 1 is pulled sideways, the wire 9 that is on the outside curve at the bottom needs more length and hence pull on the same wire 9 at the top, causing the distal positioning element 3 to contract on that side. Vice versa, a wire 9 on the inside curve at the bottom needs less length, will push at the top and curve section 3 the other way. Combined the bottom and top sections will stay parallel, even though the middle section makes an angle.

This is one way to steer the positioning elements 2, 3 which can be used, e.g., in the embodiments of Fig. 1 or 2. Other alternative mechanisms are described below.

In an alternative embodiment (not shown), the tubular element 1 comprises two concentric coil springs in the regions of the positioning elements 2, 3. In the radial space between the two concentric coils actuator elements, e.g., wires are positioned to bend the coiled regions. Those wires can operate as actuator elements 9 similar to the embodiment shown in Fig. 3 to obtain a steerable part of the tubular element 1.

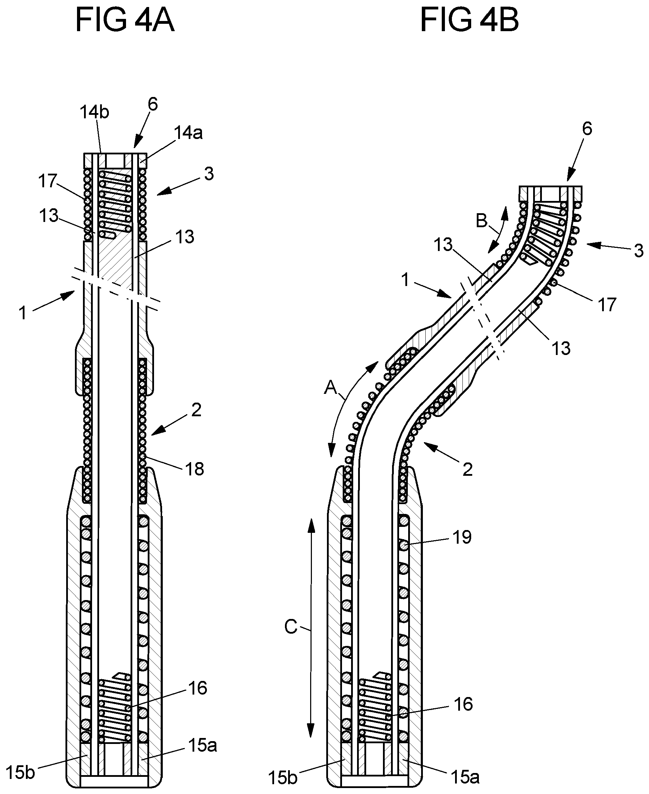

Fig. 4A, B show an alternative embodiment of a tubular element 1 with flexible (bendable) positioning elements 2, 3. Fig. 4A shows the tubular element 1 in a straight position (like the left-most tubular element 1a in Fig. 1 or 2). Fig. 4B shows the same tubular element 1 in a bent position (comparable to the right-most tubular element 1c in Fig. 2).

The interior of the tubular element 1 comprises the fiber cable to transmit the light L from the tip 6 of the tubular element 1 to the data processing device 7 (not shown here).

Unlike in the embodiment shown in Fig. 3, the force to adjust the distal positioning element 3 is not effected directly onto wires as actuator elements 9, but the force is generated by a coil spring system acting as actuator element 9a, 9b, 9c. The steerable tip 6 is positionable through a spatial parallelogram-mechanism (also known as parallelogram linkage) shown in Fig. 4A, 4B. One characteristic of a parallelogram-mechanism is that two opposite link elements in a linkage system are parallel and have the same length. Therefore, with the parallel mechanism the top and bottom parts stay parallel, if the width of the bending sections at the top and bottom are identical, i.e., by varying the width within or between the two bending sections, one can influence the alignment behavior between the straight top and bottom sections. A difference in length between the two bending sections does surprisingly enough not matter.

Cables 13 are fixed between two concentric distal rings 14a, 14b at the tip 6. The cables 13 are guided through the interior of the tubular element 1 towards two concentric proximal rings 15a, 15b at the proximal end of the tubular element 1 where they are fixed.

The proximal rings 15a, 15b form some sort of carriage that can slide within the lower part of the interior of the tubular element 1. The tubular element 1 comprises an inner spring 16 along the entire length of the cables 13 and is surrounded by three outer springs:
a) A tip spring 17 between the tip 6 and the wall 11 of the tubular element 1. This is in the region of the distal positioning element 3.
b) An intermediate spring 18 between two parts of the wall 11 of the tubular element 1, proximal from the distal positioning element 3. This is in the region of the proximal positioning means 2.
c) A compensation spring 19 towards the proximal end of the tubular element 1.

The four springs 16, 17, 18, 19 keep the cables 17 in position and prevent them from buckling.

The intermediate spring 18 is designed as a closed tension spring to increase stiffness of the connection between the parts of the tubular element 1. The other three springs are compression springs, with the compensation spring 19 stronger than the tip spring 17.

The interaction between the tip spring 17 and the compensation spring 19 is used to obtain a parallelogram control. The compensation spring 19 pushes the above-mentioned carriage and the cable ring to the right. The resulting tension force on the cables is so strong that the tip spring 17 is completely compressed in the straight position (see Figure 4A). When the tubular element 1 is bent at the proximal end (see Fig. 4B), Part A of the cable 13 at the outside of the curvature becomes longer. Part B of that cable 13, however, cannot be shortened since the tip spring 17 is already completely compressed. Instead, Part C becomes shorter, and the carriage moves upward. As a result, the other cables 13 are released. Due to these cables, the distal positioning element 3 has the same inclination / orientation as the tubular element 1 towards the base This also causes the tip spring 17 to bend with a very small radius (i.e., a sharp bend) until it reaches the same angle as the proximal part of the tubular element 1.

As, e.g., seen in the right-most tubular element 1c, the part of the tubular element 1c at the base 5 and the tip 6 both point straight upwards.

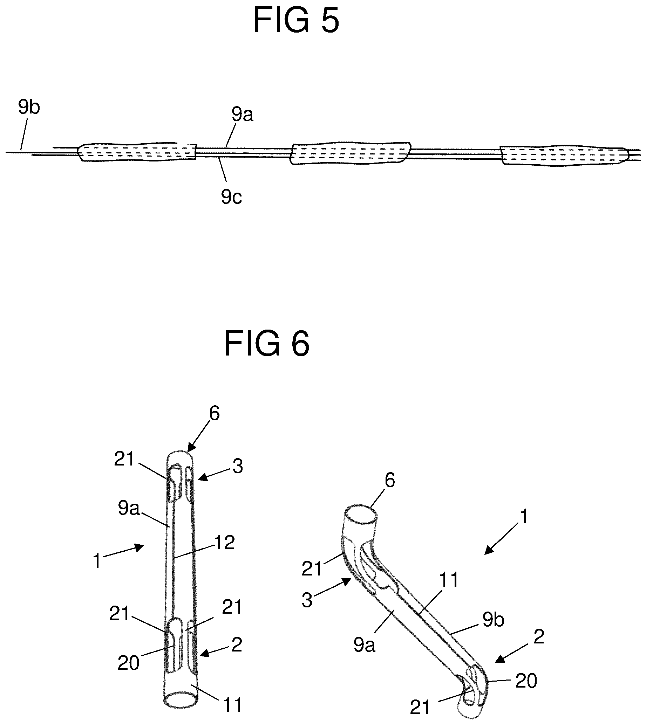

In Fig. 5, the core mechanism of a further embodiment is shown, i.e., the inner mechanism in the tubular element 1 which itself is not shown here.

Three actuator elements 9a, 9b, 9c are made from Nitinol wires with a 0.2 mm diameter. This Ni-Ti alloy has shape memory and is superelastic (i.e., there is a phase transformation in the metallic structure under stress). Given that, the Nitinol wires are well suited to act, e.g., as wires in an embodiment shown in Fig. 3 or 4.

In Fig. 6A and 6B, a further mechanism for operating a plurality of tubular elements 1 is shown using actuator elements 9. This mechanism uses a metal tube comprising longitudinal slits 11. In principle, such mechanisms are known from WO 2009 / 098244 A1 for very different context.

In Fig. 6A, the embodiment is shown in a straight, un-bent situation as, e.g., the left-most tubular elements 1a in Fig. 1 and 2. In Fig. 6B, the tubular element 1 is shown in a bent state, comparable to the middle tubular elements 1b in Fig. 1 and 2. There, the sensor elements 10, the base 5 and other units described in context of Fig. 1 and 2 are not shown for the sake of clarity. For the sake of clarity rigid outer and probably inner tubings are required to prevent radial inward or outward movements in actuator elements 9 of the embodiment are not shown.

The wall 11 of the tubular element 1 comprises a structure with longitudinal slits 12 (i.e., in an axial direction) forming actuator elements 9 in the wall 11 of the tubular element 1.

The wall 11 of the tubular element 1 is cut at different locations to generate bendable and movable sections which - like the embodiments shown in Fig. 3 to 5 - allow the controlled bending on certain sections of the tubular element 1.

At the distal and proximal ends of the tubular element 1, the wall 11 is not cut, so that the tubular element 1 is bounded at the end by ring-like uninterrupted sections, providing structural stability and mechanical anchor points.

The proximal positioning element 2 comprises cut-outs 20 in the wall 11. The cut-outs 20 in the wall 11 leave thin strips 21 of the wall 11 material.

The distal positioning element 3 similarly comprises cut-outs 20 in the wall 11. Here, also the cut-outs 20 leave thin strips 21 of the wall 11 material.

The cut-outs 20 extend around some part circumference (e.g., 90°) of the tubular element 1 and extend along the longitudinal axis. The longitudinal length of the cut-outs 20 can be 2 to 3 time the circumferential width. Typically, those cut-outs 20 and the slits 12 can be machined with a laser cutting tool. This can even give good cutting results for tubular elements with diameters below 1 cm. A typical cutting precision is about 5 µm.

Axially between the two positioning elements 2, 3, the wall 11 of the tubular element 1 comprises a structure with longitudinal slits 12 forming actuator elements 9a, 9b within the wall 11 of the tubular element 1. Therefore, the actuator elements 9a, 9b extend along the tubular element 1. The actuator elements 9a, 9b are materially continuous with the thin strips 21, the ring-like sections and the ends of the tubular element 1. Essentially, the thin-strips provide a material bridge between the ring-like structures at the ends of the tubular element 1 and the actuator elements 9a, 9b.

So, if one of the thin strips 21 at the proximal positioning means 2 is moved (e.g., pressed inwards, pulled outwards, bent etc.) by an applied force F and / or moment M through a steering device 4 (not shown here), the resulting movement in the thin strips 21 is transferred to the actuator element 9a connected to that particular thin strip 21.

The embodiment shown in Fig. 6A, 6B comprises three slits 12 (more than three is possible), one of them visible. Those slits 12 separate the wall 11 in the middle section of the tubular element 11 into two halves, best seen in Fig. 6B. So, if e.g., a moment M is applied to the proximal positioning element 2, the bending action results in a deformation of the thin strips 21, further resulting in a movement of the actuator elements 9a, 9b. That movement is translated into a movement of the distal positioning element 3 through the coupling with the thin strips 21 in the distal positioning element 3. This results in a movement of the distal positioning element 3 so that the axis of distal positioning element 3 is parallel to the axis at the distal positioning element 2, like, e.g., in the embodiment of Fig. 4.

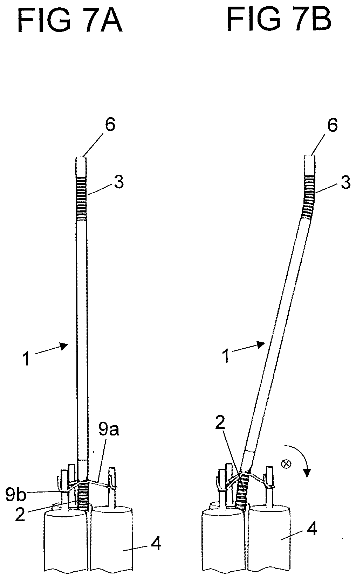

In Fig. 7A and 7B, one tubular element 1 is shown which is used together with a plurality of other tubular elements 1 as, e.g., described in Fig. 1 and 2. For the sake of simplicity, only one tubular element together with the respective steering device 4 is shown.

The inner mechanism for this embodiment is not shown, as it can be, e.g., one of the embodiments shown in Fig. 3 to 6. In each case, a movement at the proximal positioning element 2 is translated in a coordinated movement at the distal positioning element 3. As a result of that movement, the distal positioning element 3 is oriented vertically as the base of the tubular element 1.

In Fig 7A, the un-bent tubular element 1 is depicted, pointing straight upwards, as, e.g., the left-most tubular elements 1a in Fig. 1 or 2.

If a bending moment M is applied in clockwise direction at the proximal positioning element 2, the tubular element 1 is tilted towards the right in Fig. 7B. Due to a mechanism, e.g., described in Fig. 3 to 6, the distal positioning element 3 is tilted in the other direction, ending up vertically.

In Fig. 7A and 7B, an embodiment of the steering device 4 is shown. The steering device 4 comprises three small electromotors symmetrically located around the proximal end of the tubular device 1.

The proximal positioning element 2 is connected with three actuator elements 9a, 9b which can effect pulling and / or pushing forces onto the proximal positioning element at three locations, separated by 120°, around the tubular element 1. This is a kind of tripod stand, in which one, two or all three support points of the tripod can be moved. The actuator elements 9a, 9b could, e.g., be wires or strings which are tied about a rotating shaft of the electromotor of the steering device 4.

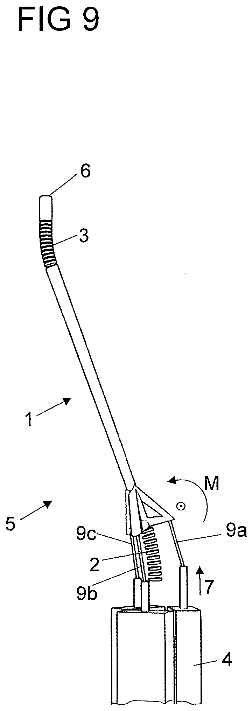

For Fig.7 (and for the embodiment of Fig. 8 as well), the wires from the electromotors are connected to the outside of the mid-section of the tube, so that the tube can be pulled to the side and/or down. In this implementation, the spring pressure in the bending sections would provide the force to go straight again as soon as the wires are released. In the embodiment of Fig.9 with linear motors both pushing and pulling can be performed and there is full control without relying on any spring force.

In those embodiments, by adjusting this pulling and pushing, a bending moment M can be applied, so that the tubular element 1 can be tilted in any direction. As described above, the distal positioning element 3 reacts to that movement as the forced guiding in one of the embodiments shown in Fig. 3 to 6 requires.

But the steering device 4 of the embodiment shown in Fig. 7A and 7B can not only tilt or swivel the tubular element 1, it also can move in axial direction (z-direction). This is shown in Fig. 8A and 8B.

If all actuator elements 9 are lifted up, the tip 6 of the tubular element 1 is lifted straight up together with the tubular element 1.

Naturally, the tilting movements shown in Fig. 7A and 7B and the vertical lifting movement shown in Fig. 8A and 8B can be combined. With this, it is possible that the tips 6 of a plurality of tubular elements 1 can be positioned in a predefined way, e.g., in a plane P as suggested in Fig. 1 or 2 or on a curved three-dimensional surface.

So, the basic configuration of the embodiments shown in Fig. 7 and 8 uses one or two wires / actuator elements 9 on a parallelogram-mechanism, while relaxing the opposite wire(s) / actuator elements 9, the middle section of the tubular element 1 can be titled to move the tip 9 over a significant circular range around the central position. While the tubular element 1 is tilting, the tip 6 in the parallel mechanism is however still pointing in the same direction. The offset in height that is introduced due to the tilting of the tubular element (i.e., a defocus from the optimal optical surface in a spectrographic application) can be compensated by relaxing or pulling all three wires (or push and pull on linear actuator elements 9) that will cause the whole mechanism to go up and down in order to compensate for the vertical offset.

This solution has the advantage that the tip 6 is still pointing in the correct direction when tilting, allowing much larger tilts and patrol areas compared to normal straight elements. Furthermore, the mechanism assures that vertical height can be adjusted, meaning that focus can be maintained, even on more complex surfaces. By adjusting the width of the mechanism between the proximal section and the middle section or between the middle and the distal section, the mechanism can be tuned to point closely to a particular point (and not necessarily to infinity), allowing the mechanism to adjust to a fixed pupil that does not necessarily have to be perfectly perpendicular to the focal surface.

This kind of combined movement is shown in an alternative embodiment to the one shown in Fig. 7 and 8 in Fig. 9, also comprising a tripod-like steering device 4. In the embodiment of Fig. 7 and 8, the actuator elements 9 were attached radially to the proximal positioning element 2, so that tilting could be achieved, e.g., by pulling the actuator element 9 in one direction. The embodiment of Fig. 9 comprises linearly movable actuator elements 9 which can be pushed out or be retracted by the electromotor. One example would be a spindle which could move axially.

Those actuator elements 9 can apply an axial force onto the undersides of the tripod stands. In Fig. 9, the first actuator element 9a is pushed upwards by a micro-linear actuator, resulting in moment M in an anti-clockwise direction; the tubular element 1 tilts towards the right. If the other two actuator elements 9b, 9c move upwards, a vertical movement and a tilting movement are superimposed.

As the embodiment shown in Fig 9 comprises a mechanism as described in Fig. 3 to 6, the distal positioning element 3 is forcibly guided to react to the movement of the proximal positioning element 2.

The embodiments follow the principle of the grid-based positioners as shown exemplary in Fig. 1 or 2. This kind of positioning allows the very rapid and simultaneous reconfiguration and by moving all tubular elements 1, e.g., having glass fibers to collect incoming light L, by steering devices 4.

In the embodiments shown, parallelogram-mechanisms, similar to that used in microsurgery, are used. The tubular elements 1 comprise a mechanism for controlled movements. The tubular elements 1 comprise three sections, where the middle section is tilted to move the tip 6, but the top and bottom sections stay parallel, ensuring that the fiber in the tip 6 points to the pupil of the optical system. While applying this parallelogram-mechanism it provides already a significant optics improvement over a tilting spine mechanism when used with two actuators (tilt in both possible directions). The claimed invention comprises three actuator elements 9a, 9a, 9c in a tripod construction, such that the mechanism can be moved in both the tip directions and in the focus direction.

One possible application is in astrophysical instrumentation, where 1000s of fibers need to be positioned across a focal surface in a telescope to match the pattern of astronomical targets spread scarcely across the sky and transfer the light to other instruments for analysis.

Some of the advantages in astronomical spectrography compared to other systems are:
- Each mechanism has a very small footprint, such that high fiber densities can be achieved.
- Each fiber can have a very large positioner range ("patrol area") compared to its footprint. The tilting can move the tip 6 of the tubular element considerably.
- Fibers can be moved from one position to the next through flexible paths making collision avoiding simple.
- The fiber tips 6 can be positioned very close together, even as a group.
- It is unlikely that collisions of tubular element 1 to cause permanent damage, as the forces and moments applied to the tubular elements 1, are typically small.
- The mechanism can be tuned such that the tips 6 with fibers are always pointed at the pupil of the optical system when moving the fiber tip over the focal surface, even if the pupil is not located perpendicular to the focal surface.
- The fiber tips 6 are placed in the focus of the optical system by actuator elements 9, even if the mechanisms are not all of exactly equal length (reducing manufacturing accuracy requirements) and when the focal surface is not smooth but has higher order terms.

One aspect of the embodiments shown in Fig. 3 to 9 is the use of a parallelogram-mechanism that acts on three sections in the tubular element 1 and ensures that the fiber tip 6 is pointing at a predetermined point (e.g., optical system pupil) even if the tubular element 1 itself is tilted.

Guide wires (Fig. 3, 4) and flexures (Fig. 5, 6) are different approaches to realize the parallelogram-mechanism. Three electromotors pulling with wires against spring action of the tubular section or linear motors pushing and pulling on the tubular section are different approaches to implement the tripod action required to tip, tilt, and piston the middle section of the tubular element of the parallelogram-mechanism.

The somewhat complex shapes of the mechanism shown in Fig. 6 can be machined in laser-cut metal tubes. Especially, the use of Nitinol material will ensure a robust, but flexible mechanism. By varying the distance between two of the three sections, the tilt angle of the top section can be adjusted in response to the tilt of the middle section.

Other possible materials for the tubular element are plastic or a composite material. Tubular elements 1 and actuator elements 9 can be made from the same material or different materials.

In the embodiments shown, the cross-section of the tubular elements 1 was circular. In other embodiments, the cross section might be elliptical or polygonal.

The measurement device 50 can be used in any application where one or many objects need to be positioned in a relatively large but thin volume.

It should be noted that the embodiment shown herein refers primarily to a measurement device in the context of the positioning device 50.

In other embodiments, the sensor device 10 could be replaced, e.g., with a LED light source or a laser, so that precise, pointwise illuminations over hundreds or thousands of points are possible. The sensor devices 10 can also be replaced by fluid manipulators for applying and / or extracting fluid at pointwise locations.

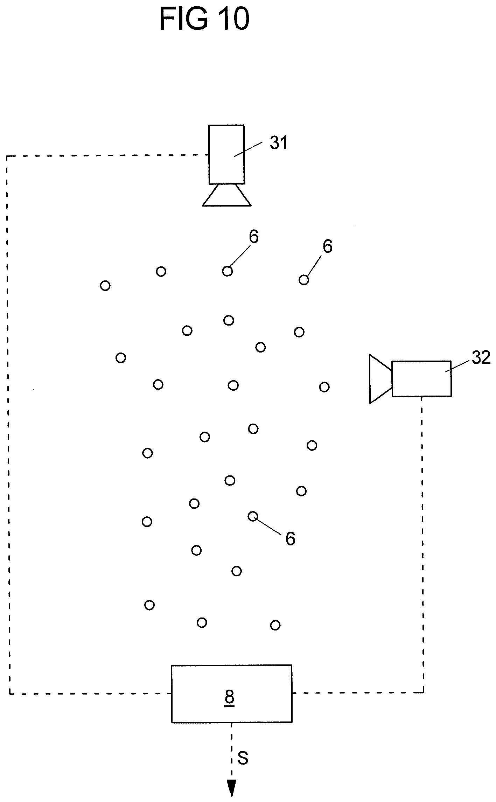

In Fig. 10 a schematic view of an embodiment of a positioning device is shown in a top view showing the tips 6 of the tubular elements 1 (not shown here). As described above, the tips 6 a positioned to capture e.g. incoming light so that the tips 6 are not perfectly positioned on a regular grid. As it likely that the tips 6 move over time at least somewhat, an imaging system using two cameras 31, 32 as a part of an imaging system can be used to determine the exact, current position of the tips 6. In Fig. 10 the position of the cameras 31, 32 is just shown schematically. Cameras 31, 32 operating with visible light are just one embodiment for an imaging system. Imagers for other wavelengths are possible, as well as imagers using acoustic signals. It is also possible that the imaging system uses devices using different techniques.

The important feature is, that two (or more) cameras 31, 32 measure the position of the tips 6 with high accuracy from two different angles. By combining the two two-dimensional images, accurate positions of the tips 6 in three-dimensional space can be calculated. If one or more measured tip 6 positions deviate from the set point, the control system 8 generates a control signal S which acts eventually on the actuator devices 9 to move the tip or the tips 6 back to the setpoint position.

Once calibrated this way, encoders on the electromotors can be used to do accurate blind positioning.

### List of reference numerals

- 1: tubular element
- 2: proximal positioning element
- 3: distal positioning element
- 4: steering device for positioning tips of tubular elements
- 5: base for tubular elements
- 6: tip of tubular element
- 7: data processing device, spectroscopic device
- 8: control device
- 9: actuator elements
- 10: sensor device
- 11: wall of tubular element
- 12: slits in wall
- 13: cable
- 14a, b: concentric distal rings
- 15a, b: concentric proximal rings
- 16: inner spring
- 17: tip spring
- 18: intermediate spring
- 19: compensation spring
- 20: cut-out
- 21: thin-strip in wall

- 31: first imaging system
- 32: second imaging system

- 50: Positioning (measurement) device

- F: force on positioning element
- L: light, measurement data
- M: moment acting on positioning element
- P: plane
- S: control signal

- X: direction in a plane parallel to the base
- Y: direction in a plane parallel to the base
- Z: direction perpendicular to the base

## Claims

1. Positioning device (50) with a plurality of positionable tubular elements (1, 1a, 1b, 1c), wherein each of the tubular elements (1, 1a, 1b, 1c) is coupled to at least one sensor device and / or effector device (10a, 10b, 10c),
measurement data (Lₐ, L_{b}, L_{c}) is obtainable at a tip (6, 6a, 6b, 6c) of the distal end of the tubular elements (1, 1a, 1b, 1c) and transferrable to the at least one sensor device (10a, 10b, 10c) and / or a pointwise action is effected by the at least one effector device,
the tubular elements (1, 1a, 1b, 1c) are movably connected with a proximal positioning element (2, 2a, 2b, 2c) towards or at a base (5) of the plurality of tubular elements (1, 1a, 1b, 1c), the tubular elements (1, 1a, 1b, 1c) in particular being arranged on a grid pattern on the base (5),
the tubular elements (1, 1a, 1b, 1c) further comprise a distal positioning element (3, 3a, 3b, 3c) distal from the proximal positioning element (2, 2a, 2b, 2c), the tubular elements (1, 1a, 1b, 1c) being more rigid than the positioning elements (2, 2a, 2b, 2c, 3a, 3b, 3c) or the region around the positioning elements (2, 2a, 2b, 2c, 3, 3a, 3b, 3c),
at least one of the positioning elements (2, 2a, 2b, 2c, 3, 3a, 3b, 3c) being connected with at least one steering device (4, 4a, 4b, 4c) for a spatial positioning of the tips (6, 6a, 6b, 6c) of the of the plurality of the tubular elements (1, 1a, 1b, 1c) and **characterized in that** the at least one steering device (4, 4a, 4b, 4c) comprises a tripod device with three actuator elements (9) for effecting a tilt movement and / or an axial movement of the proximal positioning element (2a, 2b, 2c).

2. Positioning device (50) according to claim 1, wherein the tips (6, 6a, 6b, 6c) of the tubular elements (1a, 1b, 1c) are positionable in at least one spatial direction (X, Y, Z) relative to the base (5) or relative to each other, in particular the tubular elements (1, 1a, 1b, 1c) are omnidirectional tiltable around a location at the base (5), in particular using a parallelogram-mechanism.

3. Positioning device (50) according to claims 1 or 2, wherein the tips (6, 6a, 6b, 6c) of the tubular elements (1, 1a, 1b, 1c) are positionable in a pre-defined position, in particular in a plane (P) or a curved surface, optionally wherein the tips (6, 6a, 6b, 6c) are positionable in a focal surface of a telescope or a velocity field in a fluid flow device.

4. Positioning device (50) according at least one of the preceding claims, wherein at least one sensor device (10, 10a, 10b, 10c) and / or at least one effector device is positioned at the tip (6, 6a, 6b, 6c) or at the proximal end of tubular elements (1, 1a, 1b, 1c).

5. Positioning device (50) according to at least one of the preceding claims, wherein the at least one sensor device (10, 10a, 10b, 10c) comprises a sensor element sensitive to
• electromagnetic waves, in particular light and / or
• a property of a magnetic field and / or
• a property of a chemical substance, in particular a gas and / or
particles and / or
• a property of biological signals or biological material.

6. Positioning device (50) according to at least one of the preceding claims, wherein the at least one effector device comprises a light source or fluid manipulator for taking pointwise fluid samples and / or applying fluid pointwise.

7. Positioning device (50) according to at least one of the preceding claims, wherein the at least one sensor device (10, 10a, 10b, 10c) is part of a spectroscopic device as a data processing device (7), in particular for astronomical observations so that light (Lₐ, L_{b}, L_{c}) is collectable at the tips (6, 6a, 6b, 6c) of the tubular elements (1, 1a, 1b, 1c) and transmitted through optical fibers coupled to the tubular elements (1, 1a, 1b, 1c) to the spectroscopic device (7).

8. Positioning device (50) according to at least one of the preceding claims, wherein the at least one steering device (4a, 4b, 4c) is coupled with at least one actuator element (9), in particular longitudinal actuator elements (9) in or along the wall (11) of the tubular elements (1, 1a, 1b, 1c), spring elements (16, 17, 18, 19) and / or wires in or along the tubular elements (1, 1a, 1b, 1c) for transferring a movement, a force (F) and / or a moment (M) on at least one of the positioning elements (2, 2a, 2b, 2c, 3, 3a, 3b, 3c).

9. Positioning device (50) according to at least one of the preceding claims, wherein the at least one steering device (4, 4a, 4b, 4c) comprises an electromechanical drive connected to at least one of the actuator elements (9, 16, 17, 18, 19).

10. Positioning device (50) according to at least one of the preceding claims, wherein the actuator elements (9) are designed to transfer a resulting force (F) and / or moment (M) on the distal positioning elements (3, 3a, 3b, 3c) to move the distal positioning elements (3, 3a, 3b, 3c) relative to the tubular elements (1, 1a, 1b, 1c), in particular by applying pulling at an actuator element (9) on one side of the tubular elements (1, 1a, 1b, 1c) and pushing another actuator element (9) on the opposite side of the tubular element (1, 1a, 1b, 1c).

11. Positioning device (50) according to at least one of the preceding claims, the walls (11) of the tubular elements (1, 1a, 1b, 1c) comprise a structure with at least one longitudinal slit (12) being connected to at least one actuator element (9a, 9b) acting on the walls (11) of the tubular elements (1, 1a, 1b, 1c), so that a force (F) and / or a moment (M) is transferrable to the positioning elements (2a, 2b, 2c, 3a, 3b, 3c) through cables (13) in the wall (11).

12. Positioning device (50) according to at least one of the preceding claims, wherein the at least one steering device (4, 4a, 4b, 4c) is coupled with a control device (8) for keeping the sensor devices (10, 10a, 10b, 10c), the effector devices and / or the tips (6, 6a, 6b, 6c) of the tubular elements (10a, 10b, 10c) in a predetermined position, in particular in a predetermined plane or predetermined surface, the control device (8) in particular being coupled to an imaging system (31, 32).

13. Positioning device (50) according to at least one of the preceding claims, wherein the position of the tips (6, 6a, 6b, 6c) of the tubular elements (1, 1a, 1b, 1c) can be locked in a predetermined position.

14. Positioning device (50) according to at least one of the preceding claims, wherein the tips (6, 6a, 6b, 6c) of the tubular elements (1, 1a, 1b, 1c) are positionable in a parallel direction relative to each other.

15. Positioning process including the positioning a plurality of tubular elements (1, 1a, 1b, 1c), wherein each of the tubular elements (1, 1a, 1b, 1c) is coupled to at least one sensor device (10a, 10b, 10c) and / or at least one effector device,
a) measurement data (Lₐ, L_{b}, L_{c}) is obtained at a tip (6, 6a, 6b, 6c) of the distal end of the tubular elements (1, 1a, 1b, 1c) and transferred to the at least one sensor device (10a, 10b, 10c) and / or a pointwise action is effected by the effector device,
b) the tubular elements (1, 1a, 1b, 1c) are movably connected with a proximal positioning element (2, 2a, 2b, 2c) towards or at a base (5) of the plurality of tubular elements (1, 1a, 1b, 1c), the tubular elements (1, 1a, 1b, 1c) in particular being arranged on a grid pattern on the base (5),
c) the tubular elements (1, 1a, 1b, 1c) further comprising a distal positioning element (3, 3a, 3b, 3c) distal from the proximal positioning element (2, 2a, 2b, 2c), the tubular elements (1, 1a, 1b, 1c) being more rigid than the positioning elements (2, 2a, 2b, 2c, 3a, 3b, 3c) the region around the positioning elements (2, 2a, 2b, 2c, 3, 3a, 3b, 3c),
d) at least one of the positioning elements (2, 2a, 2b, 2c, 3, 3a, 3b, 3c) being connected with at least one steering device (4, 4a, 4b, 4c), so the tips (6, 6a, 6b, 6c) of the plurality of the tubular elements (1, 1a, 1b, 1c) are spatially positioned and **characterized in that** the at least one steering device (4, 4a, 4b, 4c) comprises a tripod device with three actuator elements (9) for effecting a tilt movement and / or an axial movement of the proximal positioning element (2a, 2b, 2c).

## Patentansprüche

1. Positionierungsvorrichtung (50) mit einer Vielzahl positionierbarer rohrförmiger Elemente (1, 1a, 1b, 1c),
wobei jedes der rohrförmigen Elemente (1, 1a, 1b, 1c) mit zumindest einer Sensorvorrichtung und/oder Effektorvorrichtung (10a, 10b, 10c) gekoppelt ist, Messdaten (Lₐ, L_{b}, L_{c}) an einer Spitze (6, 6a, 6b, 6c) des distalen Endes der rohrförmigen Elemente (1, 1a, 1b, 1c) gewinnbar und an die zumindest eine Sensorvorrichtung (10a, 10b, 10c) übertragbar sind und/oder eine punktuelle Einwirkung durch die zumindest eine Effektorvorrichtung bewirkt wird,
die rohrförmigen Elemente (1, 1a, 1b, 1c) mit einem proximalen Positionierungselement (2, 2a, 2b, 2c) in Richtung einer Basis (5) der Vielzahl rohrförmiger Elemente (1, 1a, 1b, 1c) oder an dieser beweglich verbunden sind, wobei die rohrförmigen Elemente (1, 1a, 1b, 1c) insbesondere in einem Gittermuster auf der Basis (5) angeordnet sind,
die rohrförmigen Elemente (1, 1a, 1b, 1c) ferner ein distales Positionierungselement (3, 3a, 3b, 3c) distal von dem proximalen Positionierungselement (2, 2a, 2b, 2c) umfassen, wobei die rohrförmigen Elemente (1, 1a, 1b, 1c) steifer sind als die Positionierungselemente (2, 2a, 2b, 2c, 3a, 3b, 3c) oder der Bereich um die Positionierungselemente (2, 2a, 2b, 2c, 3, 3a, 3b, 3c),
zumindest eines der Positionierungselemente (2, 2a, 2b, 2c, 3, 3a, 3b, 3c) mit zumindest einer Lenkvorrichtung (4, 4a, 4b, 4c) zur räumlichen Positionierung der Spitzen (6, 6a, 6b, 6c) der Vielzahl rohrförmiger Elemente (1, 1a, 1b, 1c) verbunden ist und
**dadurch gekennzeichnet, dass** die zumindest eine Lenkvorrichtung (4, 4a, 4b, 4c) eine Dreibeinvorrichtung mit drei Aktuatorelementen (9) zum Bewirken einer Kippbewegung und/oder einer axialen Bewegung des proximalen Positionierungselements (2a, 2b, 2c) umfasst.

2. Positionierungsvorrichtung (50) nach Anspruch 1, wobei die Spitzen (6, 6a, 6b, 6c) der rohrförmigen Elemente (1a, 1b, 1c) in zumindest einer Raumrichtung (X, Y, Z) relativ zu der Basis (5) oder relativ zueinander positionierbar sind, wobei insbesondere die rohrförmigen Elemente (1, 1a, 1b, 1c) um eine Stelle an der Basis (5) in alle Richtungen kippbar sind, insbesondere unter Verwendung eines Parallelogramm-Mechanismus.

3. Positionierungsvorrichtung (50) nach Anspruch 1 oder 2, wobei die Spitzen (6, 6a, 6b, 6c) der rohrförmigen Elemente (1, 1a, 1b, 1c) in einer vordefinierten Position, insbesondere in einer Ebene (P) oder einer gekrümmten Fläche, positionierbar sind, wobei optional die Spitzen (6, 6a, 6b, 6c) in einer Fokalfläche eines Teleskops oder einem Geschwindigkeitsfeld in einer Fluidströmungsvorrichtung positionierbar sind.

4. Positionierungsvorrichtung (50) nach zumindest einem der vorhergehenden Ansprüche, wobei zumindest eine Sensorvorrichtung (10, 10a, 10b, 10c) und/oder zumindest eine Effektorvorrichtung an der Spitze (6, 6a, 6b, 6c) oder am proximalen Ende rohrförmiger Elemente (1, 1a, 1b, 1c) positioniert ist.

5. Positionierungsvorrichtung (50) nach zumindest einem der vorhergehenden Ansprüche, wobei die zumindest eine Sensorvorrichtung (10, 10a, 10b, 10c) ein Sensorelement umfasst, das empfindlich ist gegenüber:
• elektromagnetischen Wellen, insbesondere Licht, und/oder
• einer Eigenschaft eines Magnetfelds und/oder
• einer Eigenschaft einer chemischen Substanz, insbesondere eines Gases und/oder von Partikeln, und/oder
• einer Eigenschaft biologischer Signale oder biologischen Materials.

6. Positionierungsvorrichtung (50) nach zumindest einem der vorhergehenden Ansprüche, wobei die zumindest eine Effektorvorrichtung eine Lichtquelle oder einen Fluidmanipulator zur Entnahme punktueller Fluidproben und/oder zum punktuellen Aufbringen von Fluid umfasst.

7. Positionierungsvorrichtung (50) nach zumindest einem der vorhergehenden Ansprüche, wobei die zumindest eine Sensorvorrichtung (10, 10a, 10b, 10c) Teil einer spektroskopischen Vorrichtung als Datenverarbeitungsvorrichtung (7), insbesondere für astronomische Beobachtungen, ist, sodass Licht (Lₐ, L_{b}, L_{c}) an den Spitzen (6, 6a, 6b, 6c) der rohrförmigen Elemente (1, 1a, 1b, 1c) gesammelt werden kann und durch mit den rohrförmigen Elementen (1, 1a, 1b, 1c) gekoppelte optische Fasern an die spektroskopische Vorrichtung (7) übertragen wird.

8. Positionierungsvorrichtung (50) nach zumindest einem der vorhergehenden Ansprüche, wobei die zumindest eine Lenkvorrichtung (4a, 4b, 4c) mit zumindest einem Aktuatorelement (9) gekoppelt ist, insbesondere mit längsgerichteten Aktuatorelementen (9) in oder entlang der Wand (11) der rohrförmigen Elemente (1, 1a, 1b, 1c), Federelementen (16, 17, 18, 19) und/oder Drähten in den rohrförmigen Elementen (1, 1a, 1b, 1c) oder entlang derselben, zur Übertragung einer Bewegung, einer Kraft (F) und/oder eines Moments (M) auf zumindest eines der Positionierungselemente (2, 2a, 2b, 2c, 3, 3a, 3b, 3c).

9. Positionierungsvorrichtung (50) nach zumindest einem der vorhergehenden Ansprüche, wobei die zumindest eine Lenkvorrichtung (4, 4a, 4b, 4c) einen elektromechanischen Antrieb umfasst, der mit zumindest einem der Aktuatorelemente (9, 16, 17, 18, 19) verbunden ist.

10. Positionierungsvorrichtung (50) nach zumindest einem der vorhergehenden Ansprüche, wobei die Aktuatorelemente (9) dazu ausgelegt sind, eine resultierende Kraft (F) und/oder ein Moment (M) auf die distalen Positionierungselemente (3, 3a, 3b, 3c) zu übertragen, um die distalen Positionierungselemente (3, 3a, 3b, 3c) relativ zu den rohrförmigen Elementen (1, 1a, 1b, 1c) zu bewegen, insbesondere durch Ausüben eines Zugs auf ein Aktuatorelement (9) auf einer Seite der rohrförmigen Elemente (1, 1a, 1b, 1c) und Drücken eines anderen Aktuatorelements (9) auf der gegenüberliegenden Seite des rohrförmigen Elements (1, 1a, 1b, 1c).

11. Positionierungsvorrichtung (50) nach zumindest einem der vorhergehenden Ansprüche, wobei die Wände (11) der rohrförmigen Elemente (1, 1a, 1b, 1c) eine Struktur mit zumindest einem Längsschlitz (12) umfassen, verbunden mit zumindest einem Aktuatorelement (9a, 9b), das auf die Wände (11) der rohrförmigen Elemente (1, 1a, 1b, 1c) einwirkt, sodass eine Kraft (F) und/oder ein Moment (M) durch Kabel (13) in der Wand (11) auf die Positionierungselemente (2a, 2b, 2c, 3a, 3b, 3c) übertragbar ist.

12. Positionierungsvorrichtung (50) nach zumindest einem der vorhergehenden Ansprüche, wobei die zumindest eine Lenkvorrichtung (4, 4a, 4b, 4c) mit einer Steuervorrichtung (8) zum Halten der Sensorvorrichtungen (10, 10a, 10b, 10c), der Effektorvorrichtungen und/oder der Spitzen (6, 6a, 6b, 6c) der rohrförmigen Elemente (10a, 10b, 10c) in einer vorbestimmten Position, insbesondere in einer vorbestimmten Ebene oder vorbestimmten Fläche, gekoppelt ist, wobei die Steuervorrichtung (8) insbesondere mit einem Bildgebungssystem (31, 32) gekoppelt ist.

13. Positionierungsvorrichtung (50) nach zumindest einem der vorhergehenden Ansprüche, wobei die Position der Spitzen (6, 6a, 6b, 6c) der rohrförmigen Elemente (1, 1a, 1b, 1c) in einer vorbestimmten Position arretiert werden kann.

14. Positionierungsvorrichtung (50) nach zumindest einem der vorhergehenden Ansprüche, wobei die Spitzen (6, 6a, 6b, 6c) der rohrförmigen Elemente (1, 1a, 1b, 1c) in einer zueinander parallelen Richtung positionierbar sind.

15. Positionierungsverfahren, umfassend das Positionieren einer Vielzahl rohrförmiger Elemente (1, 1a, 1b, 1c), wobei jedes der rohrförmigen Elemente (1, 1a, 1b, 1c) mit zumindest einer Sensorvorrichtung (10a, 10b, 10c) und/oder zumindest einer Effektorvorrichtung gekoppelt ist,
a) Messdaten (Lₐ, L_{b}, L_{c}) an einer Spitze (6, 6a, 6b, 6c) des distalen Endes der rohrförmigen Elemente (1, 1a, 1b, 1c) gewonnen und an die zumindest eine Sensorvorrichtung (10a, 10b, 10c) übertragen werden und/oder eine punktuelle Einwirkung durch die Effektorvorrichtung bewirkt wird,
b) die rohrförmigen Elemente (1, 1a, 1b, 1c) mit einem proximalen Positionierungselement (2, 2a, 2b, 2c) in Richtung einer Basis (5) der Vielzahl rohrförmiger Elemente (1, 1a, 1b, 1c) oder an dieser beweglich verbunden sind, wobei die rohrförmigen Elemente (1, 1a, 1b, 1c) insbesondere in einem Gittermuster auf der Basis (5) angeordnet sind,
c) die rohrförmigen Elemente (1, 1a, 1b, 1c) ferner ein distales Positionierungselement (3, 3a, 3b, 3c) distal von dem proximalen Positionierungselement (2, 2a, 2b, 2c) umfassen, wobei die rohrförmigen Elemente (1, 1a, 1b, 1c) steifer sind als die Positionierungselemente (2, 2a, 2b, 2c, 3a, 3b, 3c) oder der Bereich um die Positionierungselemente (2, 2a, 2b, 2c, 3, 3a, 3b, 3c),
d) zumindest eines der Positionierungselemente (2, 2a, 2b, 2c, 3, 3a, 3b, 3c) mit zumindest einer Lenkvorrichtung (4, 4a, 4b, 4c) verbunden ist, sodass die Spitzen (6, 6a, 6b, 6c) der Vielzahl rohrförmiger Elemente (1, 1a, 1b, 1c) räumlich positioniert werden
und **dadurch gekennzeichnet, dass** die zumindest eine Lenkvorrichtung (4, 4a, 4b, 4c) eine Dreibeinvorrichtung mit drei Aktuatorelementen (9) zum Bewirken einer Kippbewegung und/oder einer axialen Bewegung des proximalen Positionierungselements (2a, 2b, 2c) umfasst.

## Revendications

1. Dispositif de positionnement (50) avec une pluralité d'éléments tubulaires positionnables (1, 1a, 1b, 1c),
dans lequel chacun des éléments tubulaires (1, 1a, 1b, 1c) est couplé à au moins un dispositif capteur et/ou dispositif effecteur (10a, 10b, 10c),
des données de mesure (Lₐ, L_{b}, L_{c}) peuvent être obtenues à une pointe (6, 6a, 6b, 6c) de l'extrémité distale des éléments tubulaires (1, 1a, 1b, 1c) et transférées audit au moins un dispositif capteur (10a, 10b, 10c) et/ou une action ponctuelle est effectuée par ledit au moins un dispositif effecteur,
les éléments tubulaires (1, 1a, 1b, 1c) sont reliés de manière mobile à un élément de positionnement proximal (2, 2a, 2b, 2c) vers une base (5) de la pluralité d'éléments tubulaires (1, 1a, 1b, 1c) ou au niveau de celle-ci, les éléments tubulaires (1, 1a, 1b, 1c) étant en particulier disposés selon un motif de grille sur la base (5),
les éléments tubulaires (1, 1a, 1b, 1c) comprennent en outre un élément de positionnement distal (3, 3a, 3b, 3c) distal par rapport à l'élément de positionnement proximal (2, 2a, 2b, 2c), les éléments tubulaires (1, 1a, 1b, 1c) étant plus rigides que les éléments de positionnement (2, 2a, 2b, 2c, 3a, 3b, 3c) ou la région autour des éléments de positionnement (2, 2a, 2b, 2c, 3, 3a, 3b, 3c),
au moins l'un des éléments de positionnement (2, 2a, 2b, 2c, 3, 3a, 3b, 3c) étant relié à au moins un dispositif d'orientation (4, 4a, 4b, 4c) pour un positionnement spatial des pointes (6, 6a, 6b, 6c) de la pluralité d'éléments tubulaires (1, 1a, 1b, 1c) et
**caractérisé en ce que** ledit au moins un dispositif d'orientation (4, 4a, 4b, 4c) comprend un dispositif tripode avec trois éléments actionneurs (9) pour produire un mouvement d'inclinaison et/ou un mouvement axial de l'élément de positionnement proximal (2a, 2b, 2c).

2. Dispositif de positionnement (50) selon la revendication 1, dans lequel les pointes (6, 6a, 6b, 6c) des éléments tubulaires (1a, 1b, 1c) peuvent être positionnées dans au moins une direction spatiale (X, Y, Z) par rapport à la base (5) ou les unes par rapport aux autres, les éléments tubulaires (1, 1a, 1b, 1c) étant en particulier inclinables dans toutes les directions autour d'un emplacement au niveau de la base (5), en particulier en utilisant un mécanisme à parallélogramme.

3. Dispositif de positionnement (50) selon la revendication 1 ou 2, dans lequel les pointes (6, 6a, 6b, 6c) des éléments tubulaires (1, 1a, 1b, 1c) peuvent être positionnées dans une position prédéfinie, en particulier dans un plan (P) ou une surface courbe, les pointes (6, 6a, 6b, 6c) pouvant optionnellement être positionnées dans une surface focale d'un télescope ou un champ de vitesse dans un dispositif d'écoulement de fluide.

4. Dispositif de positionnement (50) selon au moins l'une des revendications précédentes, dans lequel au moins un dispositif capteur (10, 10a, 10b, 10c) et/ou au moins un dispositif effecteur est positionné à la pointe (6, 6a, 6b, 6c) ou à l'extrémité proximale d'éléments tubulaires (1, 1a, 1b, 1c).

5. Dispositif de positionnement (50) selon au moins l'une des revendications précédentes, dans lequel ledit au moins un dispositif capteur (10, 10a, 10b, 10c) comprend un élément capteur sensible à :
• des ondes électromagnétiques, en particulier la lumière, et/ou
• une propriété d'un champ magnétique et/ou
• une propriété d'une substance chimique, en particulier d'un gaz et/ou de particules, et/ou
• une propriété de signaux biologiques ou de matière biologique.

6. Dispositif de positionnement (50) selon au moins l'une des revendications précédentes, dans lequel ledit au moins un dispositif effecteur comprend une source lumineuse ou un manipulateur de fluide pour prélever des échantillons ponctuels de fluide et/ou appliquer du fluide de manière ponctuelle.

7. Dispositif de positionnement (50) selon au moins l'une des revendications précédentes, dans lequel ledit au moins un dispositif capteur (10, 10a, 10b, 10c) fait partie d'un dispositif spectroscopique en tant que dispositif de traitement de données (7), en particulier pour des observations astronomiques, de sorte que la lumière (Lₐ, L_{b}, L_{c}) peut être collectée aux pointes (6, 6a, 6b, 6c) des éléments tubulaires (1, 1a, 1b, 1c) et est transmise par des fibres optiques couplées aux éléments tubulaires (1, 1a, 1b, 1c) au dispositif spectroscopique (7).

8. Dispositif de positionnement (50) selon au moins l'une des revendications précédentes, dans lequel ledit au moins un dispositif d'orientation (4a, 4b, 4c) est couplé à au moins un élément actionneur (9), en particulier à des éléments actionneurs longitudinaux (9) dans la paroi (11) des éléments tubulaires (1, 1a, 1b, 1c) ou le long de celle-ci, à des éléments de ressort (16, 17, 18, 19) et/ou à des fils dans les éléments tubulaires (1, 1a, 1b, 1c) ou le long de ceux-ci, pour transférer un mouvement, une force (F) et/ou un moment (M) à au moins l'un des éléments de positionnement (2, 2a, 2b, 2c, 3, 3a, 3b, 3c).

9. Dispositif de positionnement (50) selon au moins l'une des revendications précédentes, dans lequel ledit au moins un dispositif d'orientation (4, 4a, 4b, 4c) comprend un entraînement électromécanique relié à au moins l'un des éléments actionneurs (9, 16, 17, 18, 19).

10. Dispositif de positionnement (50) selon au moins l'une des revendications précédentes, dans lequel les éléments actionneurs (9) sont conçus pour transférer une force résultante (F) et/ou un moment (M) aux éléments de positionnement distaux (3, 3a, 3b, 3c) afin de déplacer les éléments de positionnement distaux (3, 3a, 3b, 3c) par rapport aux éléments tubulaires (1, 1a, 1b, 1c), en particulier en appliquant une traction à un élément actionneur (9) d'un côté des éléments tubulaires (1, 1a, 1b, 1c) et en poussant un autre élément actionneur (9) du côté opposé de l'élément tubulaire (1, 1a, 1b, 1c).

11. Dispositif de positionnement (50) selon au moins l'une des revendications précédentes, les parois (11) des éléments tubulaires (1, 1a, 1b, 1c) comprennent une structure avec au moins une fente longitudinale (12), reliée à au moins un élément actionneur (9a, 9b) agissant sur les parois (11) des éléments tubulaires (1, 1a, 1b, 1c), de sorte qu'une force (F) et/ou un moment (M) peut être transféré aux éléments de positionnement (2a, 2b, 2c, 3a, 3b, 3c) par des câbles (13) dans la paroi (11).

12. Dispositif de positionnement (50) selon au moins l'une des revendications précédentes, dans lequel ledit au moins un dispositif d'orientation (4, 4a, 4b, 4c) est couplé à un dispositif de commande (8) pour maintenir les dispositifs capteurs (10, 10a, 10b, 10c), les dispositifs effecteurs et/ou les pointes (6, 6a, 6b, 6c) des éléments tubulaires (10a, 10b, 10c) dans une position prédéterminée, en particulier dans un plan prédéterminé ou une surface prédéterminée, le dispositif de commande (8) étant en particulier couplé à un système d'imagerie (31, 32).

13. Dispositif de positionnement (50) selon au moins l'une des revendications précédentes, dans lequel la position des pointes (6, 6a, 6b, 6c) des éléments tubulaires (1, 1a, 1b, 1c) peut être verrouillée dans une position prédéterminée.

14. Dispositif de positionnement (50) selon au moins l'une des revendications précédentes, dans lequel les pointes (6, 6a, 6b, 6c) des éléments tubulaires (1, 1a, 1b, 1c) peuvent être positionnées dans une direction parallèle les unes par rapport aux autres.

15. Procédé de positionnement comprenant le positionnement d'une pluralité d'éléments tubulaires (1, 1a, 1b, 1c), dans lequel chacun des éléments tubulaires (1, 1a, 1b, 1c) est couplé à au moins un dispositif capteur (10a, 10b, 10c) et/ou à au moins un dispositif effecteur,
a) des données de mesure (Lₐ, L_{b}, L_{c}) sont obtenues à une pointe (6, 6a, 6b, 6c) de l'extrémité distale des éléments tubulaires (1, 1a, 1b, 1c) et transférées audit au moins un dispositif capteur (10a, 10b, 10c) et/ou une action ponctuelle est effectuée par le dispositif effecteur,
b) les éléments tubulaires (1, 1a, 1b, 1c) sont reliés de manière mobile à un élément de positionnement proximal (2, 2a, 2b, 2c) vers une base (5) de la pluralité d'éléments tubulaires (1, 1a, 1b, 1c) ou au niveau de celle-ci, les éléments tubulaires (1, 1a, 1b, 1c) étant en particulier disposés selon un motif de grille sur la base (5),
c) les éléments tubulaires (1, 1a, 1b, 1c) comprenant en outre un élément de positionnement distal (3, 3a, 3b, 3c) distal par rapport à l'élément de positionnement proximal (2, 2a, 2b, 2c), les éléments tubulaires (1, 1a, 1b, 1c) étant plus rigides que les éléments de positionnement (2, 2a, 2b, 2c, 3a, 3b, 3c) ou la région autour des éléments de positionnement (2, 2a, 2b, 2c, 3, 3a, 3b, 3c),
d) au moins l'un des éléments de positionnement (2, 2a, 2b, 2c, 3, 3a, 3b, 3c) étant relié à au moins un dispositif d'orientation (4, 4a, 4b, 4c), de sorte que les pointes (6, 6a, 6b, 6c) de la pluralité d'éléments tubulaires (1, 1a, 1b, 1c) sont positionnées spatialement
et **caractérisé en ce que** ledit au moins un dispositif d'orientation (4, 4a, 4b, 4c) comprend un dispositif tripode avec trois éléments actionneurs (9) pour produire un mouvement d'inclinaison et/ou un mouvement axial de l'élément de positionnement proximal (2a, 2b, 2c).
